# EUROPÄISCHE PATENTSCHRIFT

(11) **EP 1 282 238 B1**
(45) Veröffentlichungstag und Bekanntmachung des Hinweises auf die Patenterteilung: **04.07.2012**
(21) Anmeldenummer: 02014375.6
(22) Anmeldetag: 27.06.2002
(51) Int. Cl.: H04B 1/08

(54) **Elektrogerät mit einer in ein Bedienelement integrierten drahtlosen Übertragungseinheit**
Electrical apparatus with a control element having an integrated wireless transmission unit
Appareil électrique avec un élement de commande ayant une unité de transmission sans fils intégré

(30) Priorität: 30.07.2001 DE 10137229
(43) Veröffentlichungstag der Anmeldung: 05.02.2003
(73) Patentinhaber: Continental Automotive GmbH, 30165 Hannover (DE)
(72) Erfinder: Klinzer, Hans, 93049 Regensburg (DE)

(56) Entgegenhaltungen:
- EP-A- 0 867 792
- EP-A- 1 052 834
- DE-U1- 8 709 924
- US-A- 6 015 970

## Beschreibung

Die Erfindung betrifft ein Elektrogerät, insbesondere in Form eines Autoradios, gemäß dem Oberbegriff des Anspruchs 1. Die Erfindung ist in den Ansprüchen definiert. Aus der US 6, 015, 970 ist ein Schalter bekannt, der sowohl einen IR-Sender als auch die zugehörigen IR-Empfänger aufweist.

Die DE 87 09 924 U1, offenbart ein Autoradio mit einem abnehmbaren Bedienteil mit mehreren Bedienelementen. Das Bedienteil und das Autoradio kommunizieren untereinander. Hierfür werden verschiedene Übertragungsmöglichkeiten zwischen dem Bedienteil und dem Autoradio vorgeschlagen. Das Gerät funktioniert ausschließlich dann, wenn das Bedienteil auf das Autoradio aufgesteckt ist.

Die EP 0 867 792 A1, offenbart eine Betätigungsvorrichtung, bei der zwischen einem Betätigungsknopf und einer Steuervorrichtung eine geschlossenen Schutz-Trennwand angeordnet ist. Die Drehbewegung des Betatigungsknopfes wird durch die Schutz-Trennwand übertragen. Eine Kommunikation der Steuervorrichtung mit anderen Geräten ist nicht vorgesehen.

Aus der EP 1 052 834 A2 ist ein Autoradio mit einem Bluetooth-Modul bekannt, wodurch ein drahtloser Datenaustausch mit einem Mobiltelefon, das ebenfalls ein Bluetooth-Modul aufweist, ermöglicht wird.

Bei Elektrogeräten wie beispielsweise Mobilfunktelefonen, transportablen Computern und sogenannte Organizern besteht zunehmend das Bedürfnis nach einer drahtlosen Übertragung von Daten von und zu anderen Geräten. Für eine derartige Kurzstrecken-Datenübertragung haben verschiedene Hersteller den sogenannten Bluetooth-Standard entwickelt, der eine drahtlose Funkübertragung über eine Distanz von bis zu 10 m bei einer

Übertragüngsgeschwindigkeit von 1 Mbit/s ermöglicht. Hierzu wurden bereits sogenannte Bluetooth-Module entwickelt, die auf einer Platine mit einer Länge von 32 mm und einer Breite von 15 mm eine Funkantenne und die eigentliche Übertragungseinheit in Form eines Mikrochips enthalten.

Darüber hinaus wurden bereits Bluetooth-Empfänger in Autoradios von Kraftfahrzeugen eingebaut, wobei eine direkte Anordnung der vorstehend beschriebenen Bluetooth-Module auf der Frontleiterplatte des Autoradios aus Platzgründen nicht möglich ist. Die Antennen wurden deshalb von den eigentlichen Bluetooth-Empfängern getrennt und in der Frontblende des Autoradios angeordnet, während der eigentliche Bluetooth-Empfänger auf der Hauptleiterplatte des Autoradios angeordnet und mit der Antenne durch HF-Stecker bzw. sogenannte HF-Pig-Tails verbunden ist.

Nachteilig an dieser bekannten Anordnung ist jedoch die Tatsache, dass zur Verbindung der Antenne mit dem eigentlichen Bluetooth-Empfänger eine HF-kritische Verbindung erforderlich ist. Zum anderen verhindert hierbei die bauliche Trennung von Antenne und Bluetooth-Empfänger die Verwendung herkömmlicher Bluetooth-Module, die auf einer einzigen Platine integriert sind und künftig in Großserie und damit kostengünstig gefertigt werden.

Der Erfindung liegt also die Aufgabe zugrunde, die Möglichkeit zu schaffen, herkömmliche Bluetooth-Module in ein Elektrogerät zu integrieren.

Die Aufgabe wird, ausgehend von dem eingangs beschriebenen bekannten Elektrogerät gemäß dem Oberbegriff des Anspruchs 1, durch die kennzeichnenden Merkmale des Anspruchs 1 gelöst.

Die Erfindung umfasst die allgemeine technische Lehre, eine Übertragungseinheit zur drahtlosen Übertragung von Daten von und/oder zu dem Elektrogerät mindestens teilweise räumlich in ein Bedienelement des Elektrogerätes, wie beispielsweise einen Drehknopf, zu integrieren.

Es ist im Rahmen der Erfindung jedoch nicht erforderlich, dass die komplette Übertragungseinheit bzw. das komplette Bluetooth-Modul in das Bedienelement integriert ist. Vielmehr reicht es im Rahmen der Erfindung aus, wenn die Übertragungseinheit teilweise räumlich in das Bedienelement integriert ist. Dies kann beispielsweise bedeuten, dass lediglich die Antenne der Übertragungseinheit teilweise räumlich in das Bedienelement integriert ist, wohingegen der eigentliche Sender bzw. Empfänger an anderer Stelle angeordnet sein kann. Es ist jedoch auch möglich, dass die komplette Übertragungseinheit mit Antenne und Sender bzw. Empfänger teilweise räumlich in das Bedienelement integriert ist.

Bei der bevorzugten Ausführungsform handelt es sich bei dem zur Integration der Übertragungseinheit verwendeten Bedienelement um einen Drehgeber mit einer Hohlwelle, wobei die Übertragungseinheit mindestens teilweise innerhalb der Hohlwelle angeordnet ist. Eine derartige Anordnung der Übertragungseinheit bietet den Vorteil, dass die Antenne der Übertragungseinheit an günstiger Stelle plaziert ist und deshalb gute Übertragungseigenschaften aufweist. Darüber hinaus wird auf diese Weise der ansonsten ungenutzte Bauraum innerhalb der Hohlwelle ausgenutzt.

Vorzugsweise ist hierbei eine Frontleiterplatte vorgesehen, die bei einem Autoradio beispielsweise parallel zur Frontblende verläuft. Im Bereich der Drehachse der Hohlwelle ist hierbei vorzugsweise ein Durchbruch angeordnet, wobei sich die Übertragungseinheit mindestens teilweise durch den Durchbruch in der Frontleiterplatte hindurch erstreckt. Eine derartige Anordnung bietet zum einen den Vorteil, dass die Hohlwelle des Drehgebers nicht die gesamte Übertragungseinheit aufnehmen muss, so dass der Gestaltungsspielraum hinsichtlich der axialen Baulänge der Hohlwelle nicht eingeengt wird. Zum anderen bietet diese Anordnung den Vorteil, dass die Übertragungseinheit hierbei in einfacher Weise mit einer hinter der Frontleiterplatte befindlichen Hauptleiterplatte verbunden werden kann, ohne dass eine separate Kabeldurchführung durch die Frontleiterplatte erforderlich ist.

Es wurde bereits vorstehend ausgeführt, dass die Übertragungseinheit vorzugsweise eine Antenne sowie einen Sender und/oder einen Empfänger aufweist. In einer Variante der Erfindung ist die komplette Übertragungseinheit mit Antenne und Sender bzw. Empfänger mindestens teilweise räumlich in das Bedienelement integriert, so dass die Verbindung der Übertragungseinheit mit der Hauptleiterplatte oder einer anderen Baugruppe durch eine HF-unkritische Niederfrequenzleitung erfolgen kann. In einer anderen Variante der Erfindung ist dagegen nur die Antenne mindestens teilweise räumlich in das Bedienelement integriert, wohingegen der Sender bzw. der Empfänger der Übertragungseinheit an anderer Stelle, beispielsweise auf der Hauptleiterplatine, angeordnet ist. Dies bietet den Vorteil, dass der zur Verfügung stehende Bauraum für den Sender bzw. den Empfänger nicht durch die Größe des Bedienelementes begrenzt ist.

In der bevorzugten Ausführungsform ist die Übertragungseinheit jedoch komplett und vorzugsweise auch zusammen mit der Antenne auf einer einzigen Platine integriert, wobei die Platine der Übertragungseinheit vorzugsweise im wesentlichen parallel zur Drehachse der Hohlwelle und vorzugsweise mittig in der Hohlwelle angeordnet ist.

Hierbei befindet sich die Antenne vorzugsweise auf der nach außen gerichteten Seite der Platine der Übertragungseinheit, um einen möglichst guten Empfang zu gewährleisten. Darüber hinaus ist vorzugsweise vorgesehen, dass die Antenne axial nach außen über die Hohlwelle hinausragt, um eine Abschattung durch die Hohlwelle und die damit verbundene Verschlechterung der Übertragungseigenschaften zu vermeiden.

Die Erfindung ist nicht auf eine Datenübertragung entsprechend dem vorstehend beschriebenen Bluetooth-Standard beschränkt. Vielmehr ist auch eine herkömmliche Funk-, Ultraschall- oder Infrarotübertragung möglich.

Andere vorteilhafte Weiterbildungen der Erfindung sind in den Unteransprüchen gekennzeichnet oder werden nachstehend zusammen mit der Beschreibung des bevorzugten Ausführungsbeispiels der Erfindung anhand der Figuren näher erläutert. Es zeigen:
- Figur 1: eine Frontansicht eines erfindungsgemäßen Autoradios mit einem integrierten BluetoothModul,
- Figur 2: eine Aufsichtsdarstellung des in Figur 1 dargestellten Autoradios sowie
- Figur 3: eine Querschnittsdarstellung entlang der Linie A-A in Figur 1.

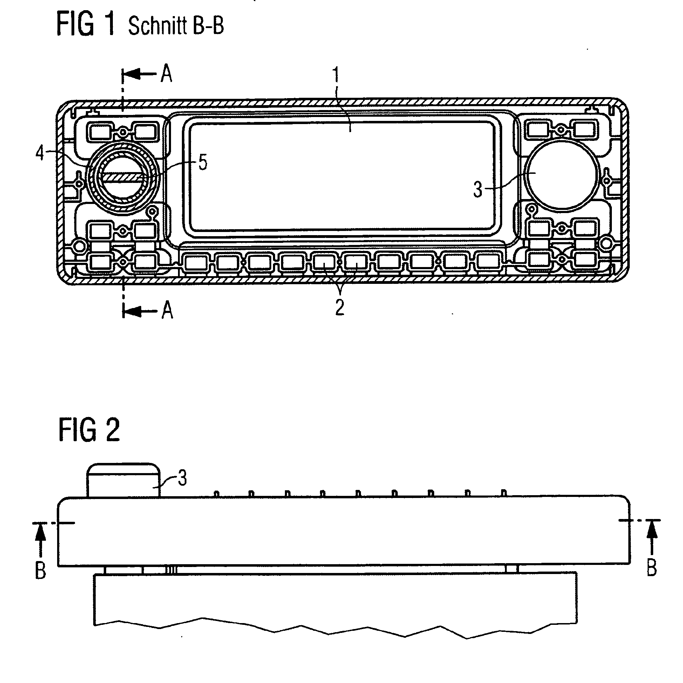

Das in Figur 1 dargestellte Autoradio ist weitgehend herkömmlich aufgebaut und weist neben einem Display 1 und mehreren Tasten 2 auch zwei Drehknöpfe 3, 4 auf, wobei in den Drehknopf 4 ein Bluetooth-Modul 5 integriert ist, wie noch detailliert beschrieben wird.

In den Figuren 1 und 2 ist hierbei eine Kunststoffkappe 6 des Drehknopfs 4 weggelassen, um die Anordnung des Bluetooth-Moduls 5 in dem Drehknopf 4 auch in der Frontansicht in Figur 1 erkennen zu können.

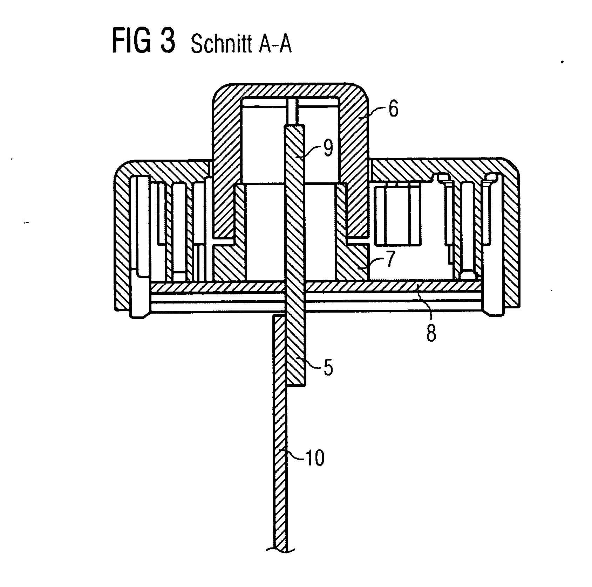

Im folgenden wird nun unter Bezugnahme auf die Querschnittsdarstellung in Figur 3 der konstruktive Aufbau des Drehknopfs 4 beschrieben.

So weist der Drehknopf 4 einen Drehwinkelgeber 7 mit einer Hohlwelle auf, wobei der Drehwinkelgeber 7 auf einer Frontleiterplatte 8 so montiert ist, dass die Drehachse des Drehwinkelgebers 7 im wesentlichen rechtwinklig zu der Frontleiterplatte 8 verläuft. Auf die Hohlwelle des Drehwinkelgebers 7 ist die Kappe 6 aufgesetzt, die von der Bedienungsperson gedreht wird. An der Kontaktstelle zwischen der Kappe 6 und der Hohlwelle des Drehwinkelgebers 7 ist deshalb eine axial verlaufende Riffelung angeordnet, um einen Kraftschluss zwischen der Kappe 6 und der Hohlwelle zu ermöglichen.

Aus der Querschnittsdarstellung in Figur 3 ist weiterhin ersichtlich, dass das Bluetooth-Modul 5 in Form einer Platine mittig innerhalb der Hohlwelle des Drehwinkelgebers 7 angeordnet ist, wobei in dem nach außen gerichteten Ende der Platine eine Antenne 9 angeordnet ist. Diese Anordnung der Antenne in dem nach außen gerichteten Ende der Platine verringert die Abschattungen und verbessert dadurch die Übertragungseigenschaften. Darüber hinaus erstreckt sich das Bluetooth-Modul 5 mit der Antenne 9 in axialer Richtung nach außen über das stirnseitige Ende der Hohlwelle des Drehwinkelgebers 7, um eine Abschattung der Antenne durch die Hohlwelle des Drehwinkelgebers zu vermeiden. Aus Figur 1 ist weiterhin ersichtlich, dass der Innendurchmesser der Hohlwelle des Drehwinkelgebers 7 im wesentlichen gleich der Breite des Bluetooth-Moduls 5 ist, so dass das Bluetooth-Modul 5 exakt in die Hohlwelle passt. Bei dem hier beschriebenen Ausführungsbeispiel weist das Bluetooth-Modul 5 eine Länge von 32 ± 0,3 mm, eine Breite von 15 ± 0,3 mm und eine Dicke von bis zu 2,7 mm auf, wohingegen die Platine des Bluetooth-Moduls 5 lediglich eine Dicke von 0,6 mm aufweist.

Weiterhin ist in der Frontleiterplatte 8 im Bereich der Hohlwelle des Drehwinkelgebers 7 ein Durchbruch 9 angeordnet, wobei sich das Bluetooth-Modul 5 durch den Durchbruch 9 in der Frontleiterplatte 8 hindurch erstreckt. Auf der dem Drehwinkelgeber 7 abgewandten Seite der Frontleiterplatte 8 ist das Bluetooth-Modul 5 sowohl elektrisch als auch mechanisch mit einer Hauptleiterplatte 10 verbunden, um die Datenübertragung von und zu den anderen Baugruppen des Autoradios zu ermöglichen. Vorteilhaft ist hierbei, dass die Verbindung des Bluetooth-Moduls 5 mit der Hauptleiterplatte 10 durch HF-unkritische Leitungen erfolgen kann.

Die Erfindung ist nicht auf das vorstehend beschriebene bevorzugte Ausführungsbeispiel beschränkt. Vielmehr ist eine Vielzahl von Varianten und Abwandlungen denkbar, die ebenfalls von dem Erfindungsgedanken Gebrauch machen und deshalb in den Schutzbereich fallen.

### Bezugszeichenliste

- 1: Display
- 2: Tasten
- 3: Drehknopf
- 4: Drehknopf
- 5: Bluetooth-Modul
- 6: Kappe
- 9: Antene
- 10: Hauptleiterplatte

## Patentansprüche

1. Elektrogerät, insbesondere in Form eines Autoradios, mit einem Bedierelement (4) zur manuellen Bedienung des Elektrogeräts durch einen Benutzer und
einer Übertragungseinheit (5) zur drahtlosen Übertragung von Daten von und zu dem Elektrogerät,
**dadurch gekennzeichnet,**
**dass** die Übertragungseinheit ein Bluetooth-Modul ist und die Übertragungseinheit (5) mindestens teilweise räumlich in das Bedienelement (4) integriert ist und das Bedienelement (4) ein Drehgeber (7) mit einer Hohlwelle ist, wobei die Übertragungseinheit (5) mindestens teilweise innerhalb der Hohlwelle angeordnet ist.

2. Elektrogerät nach Anspruch 1,
**dadurch gekennzeichnet,**
**dass** eine im wesentlichen rechtwinklig zur Drehachse der Hohlwelle verlaufende Frontleiterplatte (8) vorgesehen ist, in der im Bereich des Drehgebers ein Durchbruch (9) angeordnet ist, wobei sich die Übertragungseinheit (5) mindestens teilweise durch den Durchbruch (9) in der Frontleiterplatte (8) hindurch erstreckt.

3. Elektrogerät nach Anspruch 2,
**dadurch gekennzeichnet,**
**dass** die Übertragungseinheit (5) auf der dem Drehknopf (4) abgewandten Seite der Frontleiterplatte (8) mit einer Hauptleiterplatte (10) verbunden ist.

4. Elektrogerät nach Anspruch 3,
**dadurch gekennzeichnet,**
**dass** die Übertragungseinheit (5) eine Antenne (9) sowie einen Sender und/oder einen Empfänger aufweist,
wobei die Antenne (9) mindestens teilweise räumlich in das Bedienelement (4) integriert ist,
wohingegen der Sender und/oder der Empfänger auf der Hauptleiterplatte angeordnet ist.

5. Elektrogerät nach Anspruch 3 oder 4,
**dadurch gekennzeichnet,**
**dass** zur Verbindung der Übertragungseinheit (5) mit der Hauptleiterplatte (10) eine flexible Kabelverbindung vorgesehen ist.

6. Elektrogerät nach einem der Ansprüche 3 bis 5, **dadurch gekennzeichnet,**
**dass** zur Verbindung der Übertragungseinheit (5) mit der Hauptleiterplatine (10) eine HF-unkritische Niederfrequenz-Leitung vorgesehen ist.

7. Elektrogerät nach mindestens einem der vorhergehenden Ansprüche,
**dadurch gekennzeichnet,**
**dass** die Übertragungseinheit (5) auf einer Platine integriert ist.

8. Elektrogerät nach Anspruch 7,
**dadurch gekennzeichnet,**
**dass** die Platine der Übertragungseinheit (5) im wesentlichen parallel zur Drehachse der Hohlwelle angeordnet ist.

9. Elektrogerät nach Anspruch 8,
**dadurch gekennzeichnet,**
**dass** die Platine der Übertragungseinheit (5) im wesentlichen mittig in der Hohlwelle angeordnet ist.

10. Elektrogerät nach mindestens einem der vorhergehenden Ansprüche,
**dadurch gekennzeichnet,**
**dass** die Übertragungseinheit (5) eine Antenne (9) aufweist, wobei die Antenne (9) auf der nach außen gerichteten Seite der Übertragungseinheit (5) angeordnet ist.

11. Elektrogerät, nach Anspruch 10 und einem der Ansprüche 2 bis 9,
**dadurch gekennzeichnet,**
**dass** die Antenne (9) axial nach außen über die Hohlwelle hinausragt.

## Claims

1. Electric appliance, in particular in the form of an automotive radio, having a control element (4) for manual control of the electric appliance by a user, and a transmission unit (5) for wireless transmission of data from and to the electric appliance, **characterized in that** the transmission unit is a Bluetooth module and the transmission unit (5) is integrated at least partially spatially into the control element (4) and the control element (4) is a rotary transducer (7) with a hollow shaft, the transmission unit (5) being arranged at least partially inside the hollow shaft.

2. Electric appliance as claimed in Claim 1, **characterized in that** there is provided a front printed circuit board (8) that runs substantially at right angles to the axis of rotation of the hollow shaft and in which a cutout (9) is arranged in the region of the rotary transducer, the transmission unit (5) extending at least partially through the cutout (9) in the front printed circuit board (8).

3. Electric appliance as claimed in Claim 2, **characterized in that** on the side of the front printed circuit board (8) averted from the rotary knob (4) the transmission unit (5) is connected to a main printed circuit board (10).

4. Electric appliance as claimed in Claim 3, **characterized in that** the transmission unit (5) has an antenna (9) and a transmitter and/or a receiver, the antenna (9) being integrated at least partially spatially into the control element (4), whereas the transmitter and/or the receiver is arranged on the main printed circuit board.

5. Electric appliance as claimed in Claim 3 or 4, **characterized in that** a flexible cable connection is provided for connecting the transmission unit (5) to the main printed circuit board (10).

6. Electric appliance as claimed in one of Claims 3 to 5, **characterized in that** an RF-non-critical low-frequency line is provided for connecting the transmission unit (5) to the main printed circuit board (10).

7. Electric appliance as claimed in at least one of the preceding claims, **characterized in that** the transmission unit (5) is integrated on a circuit board.

8. Electric appliance as claimed in Claim 7, **characterized in that** the circuit board of the transmission unit (5) is substantially arranged parallel to the axis of rotation of the hollow shaft.

9. Electric appliance as claimed in Claim 8, **characterized in that** the circuit board of the transmission unit (5) is substantially arranged centrally in the hollow shaft.

10. Electric appliance as claimed in at least one of the preceding claims, **characterized in that** the transmission unit (5) has an antenna (9), the antenna (9) being arranged on the side of the transmission unit (5) directed outward.

11. Electric appliance as claimed in Claim 10 and one of Claims 2 to 9, **characterized in that** the antenna (9) projects axially outward over the hollow shaft.

## Revendications

1. Appareil électrique, notamment sous la forme d'un autoradio, comprenant un élément (4) de commande pour la commande manuelle de l'appareil électrique par un utilisateur et une unité (5) de transmission pour la transmission sans fil de données de l'appareil électrique et à l'appareil électrique, **caractérisé en ce que** l'unité de transmission est un module bluetooth et l'unité (5) de transmission est intégrée, au moins en partie, dans l'espace dans l'élément (4) de commande et l'élément (4) de commande est un transmetteur (7) de rotation ayant un arbre creux, l'unité (5) de transmission étant disposée, au moins en partie, à l'intérieur de l'arbre creux.

2. Appareil électrique suivant la revendication 1, **caractérisé en ce qu'**il est prévu une plaquette (8) à circuit imprimé avant, qui s'étend sensiblement perpendiculairement à l'axe de rotation de l'arbre creux, et dans laquelle une traversée (9) est ménagée dans la zone du transmetteur de rotation, l'unité (5) de transmission passant, au moins en partie, dans la traversée (5) de la plaquette (8) à circuit imprimé avant.

3. Appareil électrique suivant la revendication 2, **caractérisé en ce que** l'unité (5) de transmission est, du côté de la plaquette (8) à circuit imprimé avant, éloigné du bouton (4) tournant, reliée à une plaquette (10) à circuit imprimé principale.

4. Appareil électrique suivant la revendication 3, **caractérisé en ce que** l'unité (5) de transmission a une antenne (9) ainsi qu'un émetteur et/ou un récepteur, dans lequel l'antenne (9) est intégrée, au moins en partie, dans l'espace dans l'élément (4) de commande, tandis que l'émetteur et/ou le récepteur est monté sur la plaquette à circuit imprimé principale.

5. Appareil électrique suivant la revendication 3 ou 4, **caractérisé en ce qu'**il est prévu une liaison souple par câble pour la liaison de l'unité (5) de transmission à la plaquette (10) à circuit imprimé principale.

6. Appareil électrique suivant l'une des revendications 3 à 5, **caractérisé en ce qu'**il est prévu une ligne de basse fréquence non critique auxu HF pour la liaison de l'unité (5) de transmission à la platine (10) de circuit imprimée principale.

7. Appareil électrique suivant au moins l'une des revendications précédentes, **caractérisé en ce que** l'unité (5) de transmission est intégrée sur une platine.

8. Appareil électrique suivant la revendication 7, **caractérisé en ce que** la platine de l'unité (5) de transmission est montée sensiblement parallèlement à l'axe de rotation de l'arbre creux.

9. Appareil électrique suivant la revendication 8, **caractérisé en ce que** la platine de l'unité (5) de transmission est montée sensiblement au milieu dans l'arbre creux.

10. Appareil électrique suivant au moins l'une des revendications précédentes, **caractérisé en ce que** l'unité (5) de transmission a une antenne (9), l'antenne étant montée du côté de l'unité (5) de transmission dirigé vers l'extérieur.

11. Appareil électrique suivant la revendication 10 et l'une des revendications 2 à 9, **caractérisé en ce** l'antenne dépasse axialement vers l'extérieur de l'arbre creux.
